# EUROPÄISCHE PATENTSCHRIFT

(11) **EP 1 610 446 B1**
(45) Veröffentlichungstag und Bekanntmachung des Hinweises auf die Patenterteilung: **17.11.2010**
(21) Anmeldenummer: 05011232.5
(22) Anmeldetag: 24.05.2005
(51) Int. Cl.: H02K 21/16, H02K 1/14

(54) **Bürstenloser Gleichstrommotor**
Brushless DC motor
Moteur à courant continu sans balai

(30) Priorität: 21.06.2004 DE 102004029983
(43) Veröffentlichungstag der Anmeldung: 28.12.2005
(73) Patentinhaber: MINEBEA Co., Ltd., Kitasaku-gun, Nagano-ken 3849-2100 (JP)
(72) Erfinder: Hans, Helmut Dr., 78112 Sankt Georgen (DE)
(74) Vertreter: Liesegang, Eva

(56) Entgegenhaltungen:
- DE-A1- 10 229 333
- PATENT ABSTRACTS OF JAPAN Bd. 012, Nr. 085 (E-591), 17. März 1988 (1988-03-17) -& JP 62 221854 A (NIPPON DENSAN KK), 29. September 1987 (1987-09-29)

## Beschreibung

Die Erfindung betrifft einen bürstenlosen Gleichstrommotor mit einem Stator, der eine Vielzahl radial angeordneter Statorstege aufweist, wobei jedem Statorpol jeweils eine Phase zugeordnet ist.

Aus der DE 102 29 333 A1 ist ein Stator einer elektrischen Maschine bekannt, bei dem die die Statorpole bildenden Statorzähne zur Vermeidung von magnetischen Querflüssen durch einen schmalen Längsschlitz in zwei Teile geteilt sind.

Die JP 62-22 18 54 A beschreibt einen Stator mit unterschiedlich breiten Statorzähnen und optionalen Lücken zwischen den Statorzähnen zur Aufnahme von Positionssensoren. In einer Ausführung wechseln sich breite und schmale Statorzähne ab.

In bürstenlosen Gleichstrommotoren ist ein drehbarer Rotor mit einem konstanten Magnetfeld vorgesehen, sowie ein Stator, mit dem ein rotierendes Magnetfeld erzeugt werden kann. Das rotierende Magnetfeld erzeugt ein Drehmoment, das nicht konstant ist. Vielmehr ergeben sich Schwankungen im Drehmoment, die von dem Aufbau des Rotors und des Stators und von deren Lage zueinander abhängen. Im Stand der Technik ist es bekannt, abhängig von gewünschten Motorparametern, wie Leistung des Motors, Rastmomente, Redundanz der Motorwicklungen etc., verschiedene Kombination von Stator-Nutzahl und Rotor-Polzahl zu wählen. So hat z.B. ein Motor mit neun Polköpfen oder Nuten des Stators und sechzehn magnetischen Polpaaren des Rotors den Vorteil, dass er ein sehr geringes Rastmoment mit 144 Rastmomentzyklen pro Umdrehung erzeugt. Hierbei sind Rotor und Stator so ausgestaltet, dass die Rotorpole unterschiedliche Winkelversätze gegenüber den Polköpfen des Stators haben, um so den Übergang eines Rotor-Magneten von einem Polkopf zum nächsten durch einen anderen Polkopf auszugleichen, der bei der gleichen Rotorstellung der Mitte eines anderen Magnetpols gegenüberliegt.

Durch solche Vorgaben hinsichtlich der Struktur von Rotor und Stator kann sich ein Wickelschema für die Bewicklung des Stators ergeben, bei dem für jede Phase je eine Nut oder sogar mehrere Nuten Wicklungen derselben Phase mit gegenläufiger Wickelrichtung und somit gegenläufiger Bestromung aufnehmen. Die Ströme der in diesen Nuten liegenden gegenläufigen Wicklungsabschnitte derselben Phase kompensieren sich und erbringen somit keinen Beitrag zu einer Drehmomentbildung; die Wicklungen erhöhen lediglich den Wicklungswiderstand. Der Wickelraum wird bei solchen Motoren somit nicht effektiv genutzt, wodurch die Motoren ein vergleichsweise großes Volumen haben müssen, wenn eine bestimmte Motorleistung gefordert wird. Hieraus resultieren eine geringe Effektivität und relativ hohe Kosten für die Herstellung des Motors.

Ziel der Erfindung ist es, einen verbesserten bürstenlosen Gleichstrommotor vorzusehen. Insbesondere soll ein Gleichstrommotor vorgesehen werden, der kompakt und kostengünstig ist und zudem einen hohen Wirkungsgrad aufweist. Ferner soll ein Gleichstrommotor vorgesehen werden, der leicht ist.

Diese Ziele werden durch den erfindungsgemäßen Gleichstrommotor nach Anspruch 1 erfüllt.

Der Motor gemäß der Erfindung hat einen Stator, der eine Vielzahl radial angeordneter Statorpole aufweist, denen die einzelnen Phasen gemäß dem Wickelschema zugeordnet sind. Für jede Phase wird mindestens eine Statorpolgruppe durch mindestens zwei benachbarte Statorpolköpfe ausgebildet, die der gleichen Phase zugeordnet sind. Erfindungsgemäß sind zwischen den Statorpolköpfen dieser mindestens einen Statorpolgruppe keine Wicklungsabschnitte vorgesehen, wobei die zugehörigen Polstege der jeweiligen Statorpolgruppe mit einem geringeren Abstand zueinander angeordnet sind als die Stege von zwei benachbarten Statorpolen, die verschiedenen Phasen zugeordnet sind. Dabei bleibt jedoch die Winkelanordnung der Polköpfe auf der dem Rotor zugewandten Seite vorzugsweise unverändert. Erfindungsgemäß ist zwischen zwei benachbarten Statorpolgruppen mindestens ein Statorpol angeordnet, dessen Phase sich von den Phasen der benachbarten Statorpolen unterscheidet. Damit ist gewährleistet, dass Statorpolgruppen, deren Polstege mit geringem Abstand angeordnet sind, durch einen "unveränderten" Statorpol getrennt werden, wodurch der Aufbau vereinfacht wird.

Der Erfindung liegt der Gedanke zugrunde, dass die Wickelräume, welche bei den bekannten Motoren gegenläufige Wicklungen derselben Phase enthalten und somit keinen Beitrag zur Drehmomentbildung leisten, reduziert werden, um Raum für Wicklungen zu schaffen, die einen Beitrag zur Drehmomentbildung leisten. Zu diesem Zweck werden die Polstege jeweils einer Statorpolgruppe näher zueinander verschoben, wobei der minimale Abstand dieser Polstege etwa der Breite der zugehörigen Pollücke entsprechen sollte. Der so gebildete schmale Wickelraum kann leer bleiben, während die angrenzenden Statorpolnuten vergrößert sind und entsprechend mehr Wicklungsdraht aufnehmen können. Der erfindungsgemäße Motor umfasst somit unabhängig von der Kombination von Rotor-Polzahl und Stator-Nutzahl keine nebeneinander liegenden gegenläufigen Wicklungen derselben Phase, welche keinen Beitrag zur Drehmomentbildung leisten. Vielmehr werden diese Wicklungsabschnitte eliminiert und die im Stand der Technik hierfür vorgesehene Statornut zwischen den zwei Statorpolen einer Statorpolgruppe wird soweit wie möglich reduziert, d.h. die Polstege der betreffenden Statorpole werden vorzugsweise bis auf die Breite einer Statorpol-Lücke zueinander gerückt, wodurch für die anderen Wicklungen wesentlich mehr Wickelraum zur Verfügung steht. Hierdurch kann bei gleichen Kombinationen von Rotor-Polzahl und Stator-Nutzahl der Wirkungsgrad des Motors deutlich verbessert werden.

In einer Ausführungsform sind pro Phase jeweils eine oder zwei Statorpolgruppen vorgesehen, die jeweils aus zwei Statorpolen gebildet werden. Auf diese Weise sind die Statorpolgruppen, in deren Zwischenräumen keine Wicklungsabschnitte vorgesehen sind, gleichmäßig über den Stator verteilt, wodurch ein symmetrischer Aufbau erreicht wird. Dieser erlaubt einen einfachen und kostengünstigen Herstellungsprozeß.

Jeder Statorpol steht in Verbindung mit einem Polkopf, wobei zwischen den Polköpfen Statorpol-Lücken gebildet sind, die vorzugsweise gleichmäßig auf einem Kreis verteilt und um den Umfang des Rotors ausgerichtet sind.

Der Abstand zweier Polstege einer Statorpolgruppe, in deren Zwischenraum keine Wicklungsabschnitte vorgesehen sind, entspricht vorzugsweise der Breite der Statorpol-Lücke zwischen zwei benachbarten Polköpfen. Durch diese Anordnung wird einerseits der ungenutzte Wickelraum auf ein Minimum reduziert, andererseits wird ein Gleichstrommotor bereitgestellt, dessen Rotor-Pol- und Stator-Nutzahlen sowie dessen relative Lage der Rotorpole zu den Statorpolköpfen im Vergleich zu Motoren des Standes der Technik unverändert ist. Ein solcher Motor kann bei höherer Leistung dasselbe Betriebsverhalten hinsichtlich Drehmomentwelligkeit und Rastmoment erreichen wie ein bekannter Motor mit korrespondierender Pol/Nutzahlkombination.

In einer Ausführung ist das Produkt aus der Anzahl der Statorpole und der Anzahl der Rotorpole die kleinste Zahl, die ganzzahlig durch sowohl die Anzahl der Statorpole als auch durch die Anzahl der Rotorpole teilbar ist. In dieser Ausführung sind die jeweiligen Wickelversätze jedes Rotorpols zu den entsprechenden gegenüberliegendem Polköpfen voneinander verschieden. Dadurch wird die Anzahl der Rastzyklen (cogging cycles) des Motors maximal. Es wird eine gleichmäßige Verteilung der Rastmomente und somit eine Minimierung der Rastmomente erreicht. Z.B. bei einem Motor mit neun Nuten und 16 Polen ergibt sich ein sehr geringes Rastmoment mit 144 Rastmomentzyklen pro Umdrehung. (144 ist die kleinste Zahl, die sowohl durch 9 als auch durch 16 teilbar ist.) Je höher die Zahl der Zyklen ist, desto kleiner ist das Rastmoment. Es ergibt sich daher ein sehr ruhiges Laufverhalten mit geringem Rastmoment und geringer Drehmomentwelligkeit bzw. Schwankung des Antriebsmoments.

Vorzugsweise weist der Motor neun Stator-Nuten und zwei Rotorpole, neun Nuten und 16 Rotorpole, 15 Nuten und vier Rotorpole oder 18 Nuten und vier Rotorpole auf. Bei Gleichstrommotoren mit diesen Kombinationen von Polzahl und Nutzahl ergeben sich Wickelschemata, bei denen jeweils zwei gegenläufige Wicklungen derselben Phase in einer Statornut nebeneinander liegen, so dass die Wicklungsabschnitte in dieser Statornut keinen Beitrag zur Drehmomentbildung leisten. Die entsprechenden Wicklungsabschnitte können somit eliminiert werden und die korrespondierenden Wickelräume können erfindungsgemäß auf die Breite einer Statorpol-Lücke reduziert werden, um die verbleibenden Statorpolnuten als Wickelräume zu vergrößern.

Vorzugsweise weist der erfindungsgemäße Motor drei elektrische Phasen auf. Der Elektromotor wird vorzugsweise unipolar oder bipolar mit Gleichspannung betrieben. Eine Verschaltung der drei Phasen im Dreieckschaltung ist ebenso möglich wie in einer Sternschaltung.

### Kurzbeschreibung der Figuren

- Fig. 1: zeigt einen Querschnitt eines Motors nach dem Stand der Technik.
- Fig. 2: zeigt einen Querschnitt eines erfindungsgemäßen Motors.
- Fig. 3: zeigt einen Längsschnitt eines erfindungsgemäßen Motors.

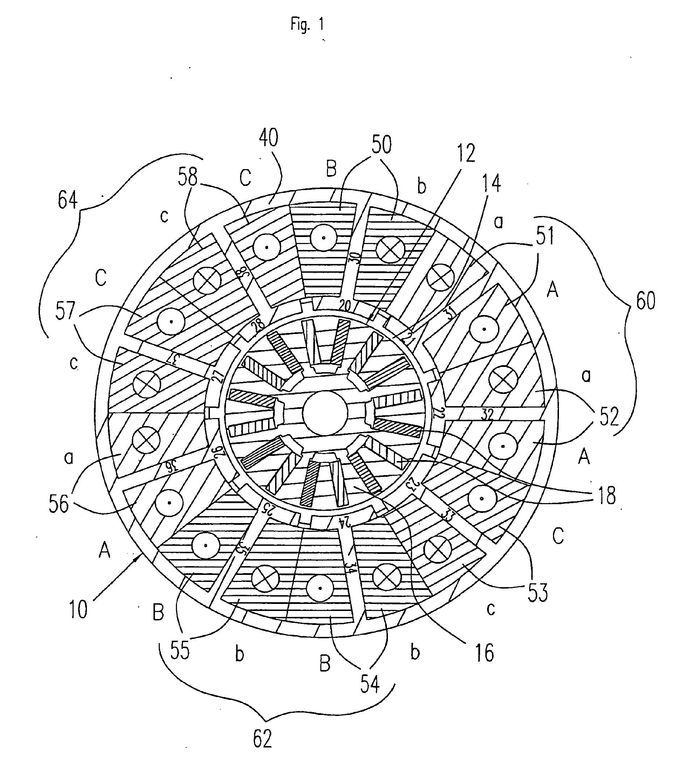

Fig. 1 zeigt einen Motor nach dem Stand der Technik mit neun Nuten und 16 Rotorpolen im Querschnitt. Die Anzahl der Statorpolnuten, d.h. der Zwischenräume zwischen zwei benachbarten Statorpolen, entspricht der Anzahl der Statorpole. Der Motor besteht aus einem Stator 10, in dessen Mitte ein Rotor 12 konzentrisch angeordnet ist. Der Rotor 12 weist einen Rotorkern 16 und 16 darin eingebettete, paarweise speichenförmig angeordnete Permanentmagnete 18 auf. Der Rotor 12 ist von dem Stator 10 durch einen Arbeitsluftspalt 14 getrennt. Der Stator 10 umfaßt neun (9) gleichmäßig um den Umfang des Rotors angeordnete Polköpfe 20 bis 28. Zwischen zwei benachbarten Statorpolen ist jeweils eine Statorpolnut gebildet. Jeder Polkopf 20 - 28 wird von einem radial angeordneten Polsteg 30 - 38 getragen, wobei die Polstege senkrecht auf die Polköpfe stoßen und mit diesen in deren Mitte verbunden sind. An ihren radial äußeren Enden sind die Polstege mit eine Rückschlussring (Statorjoch) 40 des Stators 10 verbunden. Die Polstege 30 - 38 tragen jeweils Statorwicklungen 50 - 58, wobei die Wicklungs- bzw. Bestromungsrichtung durch ⊙ und ⊗ gekennzeichnet ist. Ein Kreis mit einem Punkt bezeichnet eine aus der Zeichnungsebene heraustretende Stromrichtung, während ein Kreis mit einem Kreuz eine in die Zeichnungsebene hineinführende Stromrichtung kennzeichnet.

Die Wicklungen 50 - 58 der drei Phasen werden vorzugsweise in Dreiecks- oder Stemschaltung verschaltet (nicht gezeigt). In der Figur 1 ist ein dreiphasiger Elektromotor dargestellt. Dabei entsprechen die mit a bzw. A bezeichneten Wicklungen 51, 52 und 56 einer ersten Phase des Motors, die mit b bzw. B bezeichneten Wicklungen 50, 54 und 55 entsprechen einer zweiten Phase, und die mit c bzw. C bezeichneten Wicklungen 53, 57 und 58 entsprechen einer dritten Phase. Kleine Buchstaben zur Bezeichnung der Wicklungsabschnitte beschreiben eine in die Zeichnungsebene hinein gerichtete Wicklungsrichtung, während Großbuchstaben Wicklungsabschnitte bezeichnen, deren Wicklungsrichtung aus der Zeichnungsebene heraus deutet.

Ausgehend von diesem Stand der Technik werden bei der Erfindung zwei benachbarte Statorpole zu einer Statorpolgruppe zusammengefasst, wenn sie der gleichen Phase zugeordnet sind und gegensinnige Wicklungsabschnitte eingrenzen. Daher bilden die Statorpole 31 und 32 eine erste Statorpolgruppe 60, da sie beide der ersten Phase A zugeordnet und benachbart sind. In gleicher Weise bilden die Statorpole 34 und 35 eine zweite Statorpolgruppe 62, die der zweiten Phase B zugeordnet ist, während die Statorpole 37 und 38 eine dritte Statorpolgruppe 64 bilden, die der dritten Phase C zugeordnet ist. Die Wicklungsabschnitte zwischen zwei benachbarten Statorpolen einer Statorpolgruppe leisten keinen Beitrag zur Drehmomentbildung, weil sich die korrespondierenden Ströme aufheben.

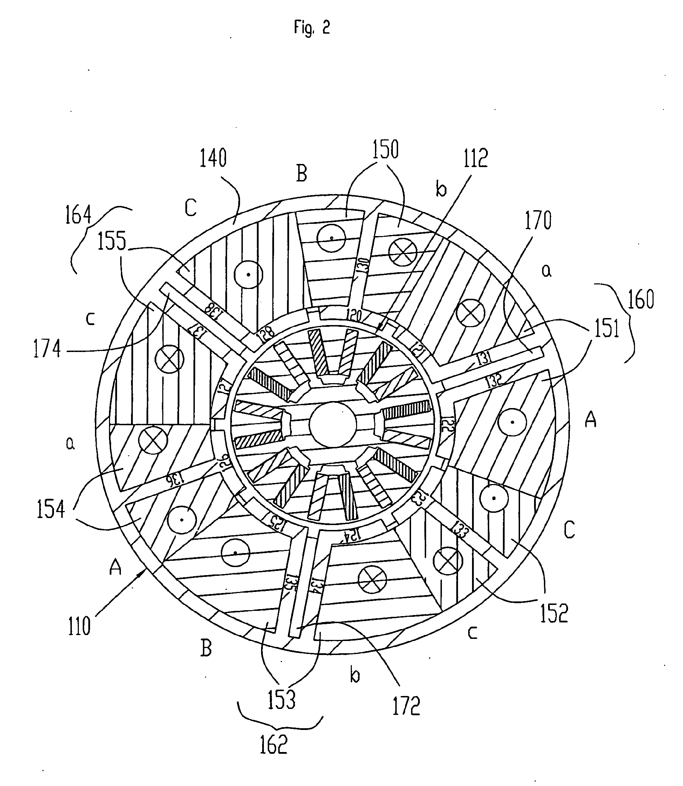

Die Fig. 2 zeigt eine Ausführung eines erfindungsgemäßen Motors, der dieselbe Polzahl und Nutzahl wie der Motor der Fig. 1 aufweist. Abgesehen von den Wicklungen sind korrespondierende Teile des in Fig. 2 dargestellten Motors mit korrespondierenden Bezugszeichen wie in der Darstellung der Fig. 1 bezeichnet, wobei den Bezugszeichen jeweils eine "1" vorangestellt wurde. Der Rotor 112 des erfindungsgemäßen Motors entspricht dem Rotor 12 des in Fig. 1 dargestellten Motors und ist hier nicht nochmals erläutert.

Der Stator 110 des erfindungsgemäßen Gleichstrommotors weist, wie der Stator des Standes der Technik, einen magnetischen Rückschlussring (Statorjoch) 140 auf, welcher sich radial nach innen erstreckende Statorpolstege 130 bis 138 trägt. An den radial innen liegenden Enden der Statorpole sind Polköpfe 120 bis 128 angeordnet, welche mit gleichmäßigem Abstand kreisförmig um den Umfang des Rotors 112 gehalten werden. Die Anordnung der Polköpfe 120 bis 128 und der zwischen diesen gebildeten Nuten entspricht der Anordnung des Standes der Technik gemäß der Figur 1. Bei dem erfindungsgemäßen Motor ist jedoch jeweils die Statornut 170, 172, 174 zwischen zwei benachbarten Polstegen 131, 132; 134, 135; 137, 138 einer Statorpolgruppe 160, 162, 164 frei gelassen, weil die korrespondierenden Wicklungsabschnitte, wie oben erläutert, keinen Beitrag zur Drehmomentbildung leisten würden. Ferner sind diese Statornuten 170, 172, 174 zwischen den benachbarten Statorpolen einer Statorpolgruppe 160, 162, 164 deutlich verkleinert, indem die korrespondierenden Statorpolstege 131, 132; 134, 135; und 137, 138 bis auf die Breite einer Statorpol-Lücke zueinander geschoben sind. Hierdurch vergrößert sich der zur Verfügung stehende Wickelraum für die verbleibenden Wicklungen 150 bis 155.

Durch den erfindungsgemäßen Aufbau ergibt sich ein Stator 110, bei dem die Statorpolstege 130 bis 138 nicht immer mittig mit den Polköpfen 120 bis 128 verbunden sind. Zur Maximierung des effektiven Wickelraums werden vielmehr die Statorpolstege 131, 132; 134, 135; 137, 138 bis auf die Breite einer Statorpol-Lücke zueinander geschoben, so dass sie jeweils mit den einander gegenüberliegenden Enden der korrespondierenden benachbarten Polköpfe 121, 122; 124, 125; 127, 128 fluchten. Diese Polstege und Polköpfe entsprechen einer Statorpolgruppe 160, 162, 164, welche im Stand der Technik Wicklungen der gleichen Phase tragen, während bei dem in Fig. 2 dargestellten Stator 110 die korrespondierende Phasenwicklung insgesamt über beide Statorpolstege 131, 132; 134, 135; 137, 138 jeweils einer Gruppe 160, 162, 164 gewickelt ist. Dies gilt für die Wicklungen 151, 153 und 155, während die verbleibenden Wicklungen 150, 152, 154, wie üblich, über jeweils nur einen Statorpolstege 130, 133, 136 gewickelt sind.

Die erfindungsgemäße Anordnung hat den Vorteil, dass für die effektiven, d.h. zur Drehmomentbildung beitragenden Wicklungen mehr Wickelraum zur Verfügung steht, während die ineffektiven Wicklungsabschnitte weggelassen werden können. Gleichwohl kann ein Gleichstrommotor mit der gleichen Kombination von Pol und Nutzahl und der gleichen relativen räumlichen Anordnung von Rotorpolen und Statornuten wie im Stand der Technik vorgesehen werden. Bei gleicher Baugröße und Pol/Nutzahlkombination kann somit ein Motor mit höherem Wirkungsgrad erreicht werden.

Wie bei der Ausführungsform der Fig. 1 sind die Wicklungen 150 bis 155 jeweils einer der drei Phasen A, B oder C zugeordnet.

Die mit Großbuchstaben bezeichneten Wicklungsabschnitte haben eine Wicklungsrichtung, die aus der Zeichnungsebene heraus zeigt, und die mit kleinen Buchstaben bezeichneten Wicklungsabschnitte haben eine Wicklungsrichtung, die in die Zeichnungsebene hineinführt. Folgt im Uhrzeigersinn ein kleiner Buchstabe auf einen großen Buchstaben, so ist die Wicklungsrichtung, vom Rotor aus gesehen, in Uhrzeigerrichtung um den entsprechenden Statorpolsteg herum. Folgt in Uhrzeigerrichtung ein Großbuchstabe auf einem Kleinbuchstaben, so ist die Wicklungsrichtung, vom Rotor aus gesehen, entgegen dem Uhrzeigersinn.

Der erfindungsgemäße Motor eignet sich insbesondere für Wickelschemata mit zwei benachbarten gleichphasigen Wicklungen mit gleicher Wicklungsrichtung. Beispiele für solche Motoren sind Kombinationen von 9 (neun) Nuten und 2 (zwei) Rotorpolen, 9 (neun) Nuten und 16 (sechzehn) Pole, 15 (fünfzehn) Nuten und 4 (vier) Pole sowie 18 (achtzehn) Nuten und 4 (vier) Pole.

Erzeugt eine Wicklung einen magnetischen Fluss, der zu mehr als einem Polkopf geleitet wird, beispielsweise Wicklungen, die sich über zwei Polstege einer Statorpolgruppe erstrekken, so kann diese Wicklung stärker bzw. mit mehr Windungen ausgeführt werden als Wicklungen, die einen magnetischen Fluss in einem Polkopf erzeugen. Dadurch wird gewährleistet, dass die Kräfte, die von den einzelnen Polköpfen erzeugt werden, gleich sind und nicht davon abhängen, ob der Polkopf einer Statorpolgruppe oder einem einzelnen Statorpol zugeordnet ist. Dadurch kann bei erfindungsgemäßen Motoren ein verbesserter Gleichlauf erzielt werden. Ferner kann der Querschnitt der Polstege der Statorpolgruppen an die Stärke des magnetischen Flusses angepasst sein, der durch die zugehörigen Wicklungen erzeugt wird, um unterschiedliche Sättigungsgrade des Magnetmaterials zu vermeiden und um alle Polköpfe mit dem gleichen Maximalfluss und daher mit der gleichen Kraftwirkung auf den Rotor vorzusehen.

Vorzugsweise sind die Statorpole und der Rückschluss einteilig aus einem gestanzten Blechpaket ausgebildet, jedoch ist es auch möglich, die Polköpfe jeweils einteilig mit den Polstegen auszubilden und diese an den Rückschluss zu befestigen.

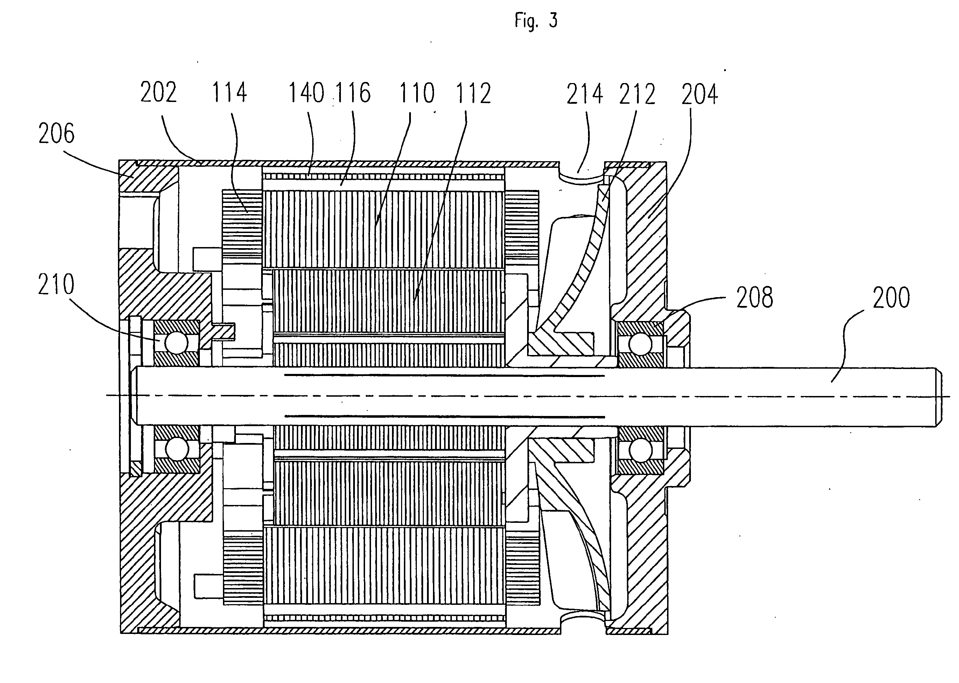

Fig. 3 zeigt eine Längsschnittdarstellung durch den erfindungsgemäßen Motor. Die Darstellung der Fig. 3 zeigt den Rotor 112, der auf eine Welle 200 aufgebracht und wie in Fig. 2 dargestellt aufgebaut ist. Der Rotor ist in den Stator 110 konzentrisch eingefügt, wobei in Fig. 3 ein äußerer Rückschlussring (Statorjoch) 140 des Stators und Wicklungen 114 schematisch dargestellt sind. Bei der gezeigten Ausführung sind sowohl der Rotor 112 als auch der Stator 110 als Blechpakete aufgebaut. Stator und Rotor sind von einer Gehäusewand 202 umschlossen, innerhalb welcher der Stator 110 gehalten ist. Das Gehäuse ist an seinen beiden Stimenden durch einen ersten und einen zweiten Gehäusedeckel 204, 206 verschlossen. Die Gehäusedeckel 204, 206 dienen als Lagerschild und könnten auch als Flansche ausgebildet sein. In die Gehäusedeckel 204, 206 sind Lager 208, 210 zur Lagerung der Welle 200 und des darauf aufgebrachten Rotors 112 integriert. Bei dem gezeigten Ausführungsbeispiel ist auf die Welle ein Lüfterrad 212 aufgebracht, das zur Belüftung des Motors über Öffnungen 214 in der Gehäusewand 202 dient.

Obgleich ein Innenläufer-Elektromotor beschrieben wurde, ist die Erfindung sinngemäß ebenfalls anwendbar auf Außenläufer-Motoren.

Die in der vorstehenden Beschreibung, den Zeichnungen und den Ansprüchen offenbarten Merkmale können sowohl einzeln als auch in beliebiger Kombination für die Verwirklichung der Erfindung in den verschiedenen Ausgestaltungen von Bedeutung sein.

### Bezugszeichenliste

- 10, 110: Stator
- 12, 112: Rotor
- 14: Arbeitsluftspalt
- 16: Rotorkern
- 18: Permanentmagnete
- 20-28, 120-128: Polköpfe
- 30-38, 130-138: Polsteg
- 40, 140: Rückschlussring (Statorjoch)
- 50-58, 150-155: Statorwicklungen
- 60: erste Statorpolgruppe
- 62: zweite Statorpolgruppe
- 64: dritte Statorpolgruppe
- 160, 162, 164: Statorpolgruppe
- 170, 172, 174: Statornut
- 114: Wicklungen
- 200: Welle
- 202: Gehäusewand
- 204, 206: Gehäusedeckel (Flansch)
- 208,210: Lager
- 212: Lüfterrad
- 214: Öffnungen
- A, a: erste Phase
- B, b: zweite Phase
- C, c: dritte Phase

## Patentansprüche

1. Gleichstrommotor mit einem Stator (112), der eine Vielzahl radial angeordneter Statorpolstege (130 - 138) aufweist, wobei jedem Statorpol jeweils eine Phase zugeordnet ist und mindestens eine Statorpolgruppe (160, 162, 164) definiert ist, die durch mindestens zwei benachbarte Statorpolstege (131, 132; 134, 135; 137, 138) gebildet wird, welche der gleichen Phase zugeordnet sind, und wobei zwischen den Statorpolstegen einer Statorpolgruppe (160, 162, 164) keine Wicklungsabschnitte vorgesehen sind und die entsprechenden Statorpolstege dieser Statorpolgruppen mit einem geringeren Abstand zueinander angeordnet sind als der Abstand von einem Statorpolsteg dieser Statorpolgruppe zu dem benachbarten Statorpolsteg, der einer anderen Phase zugeordnet ist; und wobei zwischen zwei benachbarten Statorpolgruppen (160, 162, 164) mindestens ein Statorpol (130, 133, 136) angeordnet ist, dessen Phase sich von den Phasen der benachbarten Statorpolgruppen unterscheidet.

2. Gleichstrommotor nach Anspruch 1, **dadurch gekennzeichnet, daß** die mindestens eine Statorpolgruppe (160, 162, 164) durch genau zwei benachbarte Statorpole (131, 132; 134, 135; 137, 138) gebildet ist.

3. Gleichstrommotor nach einem der vorangehenden Ansprüche, **dadurch gekennzeichnet, daß** pro Phase eine oder zwei Statorpolgruppen vorgesehen sind, die aus jeweils zwei Statorpolköpfen gebildet sind.

4. Gleichstrommotor nach einem der vorangegangenen Ansprüche, **dadurch gekennzeichnet, daß** jeder Statorpolsteg (130 - 138) in magnetische Verbindung mit einem Polkopf (120 - 128) steht und zwischen den Polköpfen Statorpol-Lücken gebildet sind, die gleichmäßig auf einem Kreis um den Umfang eines Rotors (112) verteilt sind.

5. Gleichstrommotor nach Anspruch 4, **dadurch gekennzeichnet, daß** der Abstand zweier Statorpolstege einer Statorpolgruppe einer Breite der Statorpol-Lücke der zugehörigen Statorpole entspricht.

6. Gleichstrommotor nach einem der vorangegangenen Ansprüche, **dadurch gekennzeichnet, daß** die Wicklung der Phase, welche einer Statorpolgruppe zugeordnet ist, insgesamt über beide Polstege dieser Statorpolgruppe gewickelt ist.

7. Gleichstrommotor nach einem der Ansprüche 1 bis 6, der neun Statorpole (130 - 138) und zwei oder sechzehn Rotorpole, oder alternativ fünfzehn oder achtzehn Statorpole und vier Rotorpole aufweist.

8. Gleichstrommotor einem der Ansprüche 1 bis 6, der zwei Rotorpole und alternativ 12, 15 oder 18 Statorpole aufweist.

9. Gleichstrommotor nach einem der vorangegangenen Ansprüche, **dadurch gekennzeichnet, daß** dieser drei Phasen aufweist.

## Claims

1. A direct current motor having a stator (112) that has a plurality of radially arranged stator pole bridges (130 - 138), wherein a respective phase is allocated to each stator pole and wherein at least one stator pole group (160, 162, 164) is defined, the stator pole group being formed by at least two neighboring stator pole bridges (131, 132; 134, 135; 137, 138) which are associated with the same phase, and wherein no winding sections are provided between the stator pole bridges of a stator pole group (160, 162, 164) and the respective stator pole bridges of said stator pole group are disposed relative to each other with a smaller spacing than the spacing of a stator pole bridge of said stator pole group to a neighboring stator pole bridge associated with another phase, and wherein at least one stator pole (130, 133, 136) is arranged between two neighboring stator pole groups (160, 162, 164), the phase of said stator pole being different from the phases of the neighboring stator pole groups.

2. The direct current motor according to claim 1, **characterized in that** the at least one stator pole group (160, 162, 164) is formed by exactly two neighboring stator poles (131, 132; 134, 135; 137, 138).

3. The direct current motor according to one of the preceding claims, **characterized in that** for each phase one or two stator pole groups are provided, each of which are formed from two stator pole heads.

4. The direct current motor according to one of the preceding claims, **characterized in that** each stator pole bridge (130 - 138) is magnetically connected to a pole head (120 - 128) and that stator pole gaps are formed between the pole heads, the stator-pole gaps being evenly distributed in a circle about the circumference of a rotor (112).

5. The direct current motor according to claim 4, **characterized in that** the spacing between two stator pole bridges of a stator pole group corresponds to the width of the stator pole gap of the associated stator poles.

6. The direct current motor according to one of the preceding claims, **characterized in that** the winding of the phase which is allocated to a stator pole group is wound over both pole bridges of said stator pole group.

7. The direct current motor according to one of claims 1 to 6, comprising nine stator poles (130 - 138) and two or sixteen rotor poles, or alternatively fifteen or eighteen stator poles and four rotor poles.

8. The direct current motor according to one of claims 1 to 6, comprising two rotor poles and alternatively 12, 15 or 18 stator poles.

9. The direct current motor according to one of the preceding claims, **characterized in that** it has three phases.

## Revendications

1. Moteur à courant continu avec un stator (112) présentant une pluralité de segments polaires de stator (130 - 138) disposés radialement, où une phase est affectée à chaque pôle de stator et où au moins un groupe de pôles de stator (160, 162, 164) est défini, lequel est constitué d'au moins deux segments polaires de stator (131, 132 ; 134, 135 ; 137, 138) auxquels la même phase est affectée, où aucun tronçon d'enroulement n'est prévu entre les segments polaires de stator d'un groupe de pôles de stator (160, 162, 164) et où les segments polaires de stator correspondants desdits groupes de pôles de stator sont disposés avec un espacement moindre entre eux que celui entre un segment polaire de stator dudit groupe de pôles de stator et le segment polaire de stator contigu, auquel une autre phase est affectée ; et où au moins un pôle de stator (130, 133, 136) est disposé entre deux groupes de pôles de stator contigus (160, 162, 164), dont la phase se distingue des phases des groupes de pôles de stator contigus.

2. Moteur à courant continu selon la revendication 1, **caractérisé en ce que** le ou les groupes de pôles de stator (160, 162, 164) sont formés par exactement deux pôles de stator contigus (131, 132 ; 134, 135 ; 137, 138).

3. Moteur à courant continu selon l'une des revendications précédentes, **caractérisé en ce qu'**un ou deux groupes de pôles de stator sont prévus par phase, lesquels sont respectivement constitués de deux pôles de stator.

4. Moteur à courant continu selon l'une des revendications précédentes, **caractérisé en ce que** chaque segment polaire de stator (130 - 138) est en liaison magnétique avec une tête polaire (120 - 128) et **en ce que** des interstice de pôles de stator sont formés entre les têtes de pôle, lesquels sont régulièrement répartis sur un cercle autour de la périphérie d'un rotor (112).

5. Moteur à courant continu selon la revendication 4, **caractérisé en ce que** l'espacement entre deux segments polaires de stator d'un groupe de pôles de stator correspond à une largeur de l'interstice de pôles de stator des pôles de stator correspondants.

6. Moteur à courant continu selon l'une des revendications précédentes, **caractérisé en ce que** l'enroulement de la phase affectée à un groupe de pôles de stator est intégralement enroulé sur deux segments polaires dudit groupe de pôles de stator.

7. Moteur à courant continu selon l'une des revendications 1 à 6, comportant neuf pôles de stator (130 - 138) et deux ou seize pôles de rotor, ou, de manière alternative, quinze ou dix-huit pôles de stator et quatre pôles de rotor.

8. Moteur à courant continu selon l'une des revendications 1 à 6, comportant deux pôles de rotor et, de manière alternative, 12, 15 ou 18 pôles de stator.

9. Moteur à courant continu selon l'une des revendications précédentes, **caractérisé en ce qu'**il est pourvu de trois phases.
